# EUROPEAN PATENT APPLICATION

(11) **EP 3 145 050 A1**
(43) Date of publication of application: **22.03.2017**
(21) Application number: 16189208.8
(22) Date of filing: 16.09.2016
(51) Int. Cl.: H02J 50/10, H02J 7/00

(54) **WIRELESS POWER RECEIVER WITH DYNAMICALLY CONFIGURABLE POWER PATH**

(30) Priority: 17.09.2015 US 201562219797 P; 19.05.2016 US 201615158847
(71) Applicant: MediaTek Inc., Hsin-Chu 300 (TW)
(72) Inventor: Satyamoorthy, Anand, Somerville, MA Massachusetts 02144 (US); Riehl, Patrick Stanley, Lynnfield, MA Massachusetts 01940 (US); Ting, Ming-Chiang, 300 Hsinchu City (TW); Lin, Hung-Chih, Citon Township, Yunlin County (TW)
(74) Representative: Gilani, Anwar

(57) **Abstract**

Methods and apparatus for dynamically selecting one of two power paths in a wireless power receiver. A first power path of the two power paths provides a regulated voltage to output circuitry electrically connected to the wireless power receiver. A second power path of the two power paths provides an unregulated voltage to the output circuitry.

## Description

### TECHNICAL FIELD

The present invention relates to a wireless power receiver and to a mobile electronic device comprising a wireless power receiver.

### BACKGROUND

Wireless power (WP) transfer systems use the mutual inductance between two magnetic coils to transfer power through magnetic induction. At the receiver side, usually a receiver coil is connected to a bridge rectifier followed by a regulator. The bridge rectifier converts the AC power signal to a DC power supply and the regulator regulates the DC power supply to a suitable voltage level for a following circuit such as a battery charger. Wireless power systems are commonly classified as either "inductive" or "resonant" type. In an inductive-type wireless power system, a wireless transmitter and receiver operate like a tightly coupled transformer to deliver energy to a load. Because of the one-to-one inductive coupling required in inductive-type wireless power systems, they are typically suitable for charging one receiver at a time. Resonant-type wireless power systems deliver power through loosely coupled coil pairs and utilize electrical resonance to enhance the system efficiency. For resonant-type wireless power systems receiver numbers can be increased and charged in the same field.

At the wireless power receiver side, voltage regulation is applied to step-down the rectifier voltage to a suitable voltage for the following charger circuit. In an inductive single receiver wireless power system, this regulation can be a linear Low dropout regulator (LDO). The efficiency of a LDO is defined by its output-to-input ratio. In a single receiver wireless system, the LDO input voltage (the rectifier voltage) can be controlled to be close to its output voltage resulting in a higher power efficiency. Power control is achieved by sending a power control message from the receiver to the transmitter through in-band or out-of-band communication.

In a resonant mode wireless power system, multiple receivers make it difficult to control all of the rectifier voltages close to the target charging voltage because each receiver has a different coil coupling factor. Accordingly, the rectifier voltage can be higher than the regulator output, which reduces the power transfer efficiency through an LDO. A switching mode regulator (SMPS) may be applied for better efficiency when the voltage step down ratio is large.

Recently, fast charging is more and more important for smart phone and tablet applications. Reducing the charging time with a larger charging current (e.g., >1 A) has been adopted by more and more products in the consumer market. In fast charging, the charger circuit can charge at a higher input voltage (e.g., ∼20V) rather than a regulated voltage (e.g., ∼5V). As a result, the wireless power receiver can directly connect the rectifier output to the fast charging charger through a power switch (PSW). The power switch is used to control the start/stop of wireless charging that is required by some wireless power standards.

A multi-mode wireless receiver integrated circuit (IC) that aims to support both inductive- and resonant-type wireless power systems with a fast charging function, requires a large die area to implement the pass device of LDO, SMPS and PSW separately, resulting in a costly IC implementation. A more cost effective technique is to implement the LDO, SMPS and PSW by sharing the same pass device. Furthermore, to achieve high power transfer efficiency performance, using an NMOS type FET as the pass device has better efficiency and a smaller die area than using a PMOS type FET pass device.

Implementing the control circuit for sharing the NMOS pass device of LDO, SMPS and PSW requires a non-trivial biasing configuration. A bootstrapping technique may be used to implement the high-side driver of SMPS with a NMOS pass device. In PSW mode or a near dropout operating LDO mode, a step-up voltage is required for powering the LDO and PSW controller. This step-up voltage can be implemented by an on-chip charge pump circuit.

### SUMMARY

In this disclosure, a wireless power receiver IC in which the power path can be reconfigured as either a low-dropout regulator (LDO), a switched-mode power supply (SMPS) or a power switch (PSW) is provided. All three modes share the same pass device to reduce die area, and share the same output terminal to reduce the number of pins. In an inductive wireless receiver, the power path can be reprogrammed on the fly to LDO or PSW mode. In a resonant or multi-mode wireless receiver, the power path can be reprogrammed on the fly to SMPS or PSW mode. This more cost effective method implements the LDO, SMPS and PSW by sharing the same pass device. Furthermore, to achieve high power transfer efficiency performance, using N-channel MOSFET as its pass device has better efficiency and a smaller die area than PMOS type FET pass device.

In one embodiment, a wireless power receiver integrated circuit comprises a first rectifier input terminal AC1, a second rectifier input terminal AC2, a rectified output terminal VRECT, a synchronous rectifier circuit that receives an input power from AC1 and AC2 and outputs a rectified voltage onto VRECT, and a programmable voltage regulator coupled to VRECT, wherein the programmable voltage regulator is configured to operate as one of a switched-mode power supply (SMPS), a low dropout regulator (LDO), and a power switch (PSW), and wherein the programmable voltage regulator comprises a common pass device that outputs an output voltage onto a common output terminal VOUT.

In one circuit implementation, a charge pump is used to provide a boosted voltage to power the LDO/PSW controller. In another circuit implementation, the boosted voltage supply is sourced from the bootstrapped domains of the high-side N-channel MOSFET synchronous rectifier.

In one aspect, a power-saving loopback mode is used in which the efficiently produced voltage output of the SMPS voltage regulator powers the internal circuits within the power path. In loopback mode, the SMPS output is routed back to the receiver IC onto a loopback terminal to provide the internal power supply. In one embodiment, a loopback switch is inserted between an internal power supply node and the loopback terminal. The loopback switch is turned on after the SMPS voltage regulator is activated to improve the system efficiency because the internal power is efficiently provided through the SMPS voltage regulator rather than being provided by an internal LDO. Typically, a switching mode regulator has better efficiency than LDO when the voltage step down ratio is large.

Another aspect is directed to a synchronous rectifier using only n-channel devices in which the low-side switches are effectively cross-coupled using low-side comparators and in which the high-side switches perform an accurate zero-voltage-switching (ZVS) comparison. The charging path of each bootstrap domain is completed through the rectifier low-side switches, which are each always on for every half-cycle independent of loading. This scheme provides a rectifier efficiency gain because a) each bootstrap domain receives maximum charging time, and b) the charging occurs through a switch rather than a diode. Both of these factors ensure the bootstrap domain is fully charged, thereby reducing conduction losses through the rectifier switches. Furthermore, settings may be adjusted by software to optimize the resistive and capacitive losses of the rectifier. Using data for die temperature and operating frequency, software can create a feedback loop, dynamically adjusting rectifier settings in order to achieve the best possible efficiency.

Other embodiments relate to a wireless power receiver. The wireless power receiver comprises rectifier circuitry configured to output a rectified voltage, power path circuitry including bypass circuitry configured to output an unregulated voltage, voltage regulator circuitry configured to output a regulated voltage, and mode controller circuitry configured to enable the bypass circuitry or the voltage regulator circuitry based, at least in part, on the rectified voltage and information describing an allowable input voltage for output circuitry electrically connected to the wireless power receiver.

The bypass circuitry may comprise a MOSFET switch that, when enabled, outputs the unregulated voltage.

The voltage regulator circuitry may be implemented as a buck voltage regulator.

The information describing an allowable input voltage for output circuitry may include a maximum allowable charging voltage for a battery charging circuit, and the mode controller circuitry may be configured to enable the bypass circuitry when the rectified voltage is less than the maximum allowable charging voltage.

The mode controller circuitry may be configured to detect, during operation of the wireless power receiver, that the rectified voltage has exceeded a maximum allowable voltage for the electrically connected circuitry, and the mode controller circuitry may be configured to control the bypass circuitry and/or the voltage regulator circuitry to dynamically switch from using the bypass circuitry to using the voltage regulator circuitry when the mode controller circuitry detects that the rectified voltage has exceeded the maximum allowable voltage.

The mode controller circuitry may be configured to detect, during operation of the wireless power receiver, that the rectified voltage is less than a maximum allowable voltage for the electrically connected circuitry, and the mode controller circuitry may be configured to control the bypass circuitry and/or the voltage regulator circuitry to dynamically switch from using the voltage regulator circuitry to using the bypass circuitry when the mode controller circuitry detects that the rectified voltage is less than the maximum allowable voltage.

The output circuitry may include a battery charger for a mobile electronic device, and the information describing an allowable input voltage for output circuitry may include an allowable charging voltage range for the battery charger.

The bypass circuitry may include a switch and low dropout (LDO) circuitry configured to receive a control signal from the mode controller circuitry to enable or disable the switch.

Other embodiments relate to a mobile electronic device. The mobile electronic device comprises a rechargeable battery, charging circuitry configured to charge the rechargeable battery in response to receiving a charging voltage, and a wireless power receiver electrically connected to the charging circuitry. The wireless power receiver comprises rectifier circuitry configured to convert an AC power signal to a rectified DC voltage, bypass circuitry configured to output an unregulated voltage to the charging circuitry as the charging voltage, voltage regulator circuitry configured to output a regulated voltage to the charging circuitry as the charging voltage, and mode controller circuitry configured to selectively enable the bypass circuitry or the voltage regulator circuitry based, at least in part, on the rectified DC voltage and information describing an allowable charging voltage for the charging circuitry.

The bypass circuitry may comprise a MOSFET switch that, when enabled, outputs the unregulated voltage to the charging circuitry as the charging voltage.

The information describing an allowable charging voltage for the charging circuitry may include a maximum allowable charging voltage, and the mode controller circuitry may be configured to enable the bypass circuitry when the rectified DC voltage is less than the maximum allowable charging voltage.

The mode controller circuitry may be configured to detect, during operation of the wireless power receiver, that the rectified DC voltage has exceeded a maximum allowable charging voltage for the charging circuitry, and the mode controller circuitry may be configured to control the bypass circuitry and/or the voltage regulator circuitry to dynamically switch from using the bypass circuitry to using the voltage regulator circuitry when the mode controller circuitry detects that the rectified DC voltage has exceeded the maximum allowable charging voltage for the charging circuitry.

The mode controller circuitry may be configured to detect, during operation of the wireless power receiver, that the rectified DC voltage is less than a maximum allowable charging voltage for the charging circuitry, and the mode controller circuitry may be configured to control the bypass circuitry and/or the voltage regulator circuitry to dynamically switch from using the voltage regulator circuitry to using the bypass circuitry when the mode controller circuitry detects that the rectified DC voltage is less than the maximum allowable charging voltage for the charging circuitry.

The bypass circuitry may include a switch and low dropout (LDO) circuitry configured to receive a control signal from the mode controller circuitry to enable or disable the switch.

The charging circuitry may comprise a fast-charging mode and a normal-charging mode.

The information describing an allowable charging voltage for the charging circuitry may include information about the fast-charging mode and/or the normal-charging mode.

Other embodiments are directed to a wireless power receiver, comprising: mode controller circuitry configured to enable bypass circuitry for outputting an unregulated voltage or voltage regulator circuitry for outputting a regulated voltage, wherein a determination of whether to enable the bypass circuitry or the voltage regulator circuitry is based, at least in part, on a rectified voltage and information describing an allowable input voltage for output circuitry electrically connected to the wireless power receiver.

Other embodiments are directed to a method of selectively enabling a power path in a wireless power receiver. The method comprises receiving information describing an allowable input voltage for output circuitry electrically connected to the wireless power receiver; and enabling, based on the received information and a rectified voltage, bypass circuitry configured to output an unregulated voltage or voltage regulator circuitry configured to output a regulated voltage.

The received information may include a maximum input voltage, and wherein the method further comprises enabling the bypass circuitry when the rectified voltage is less than the maximum input voltage and enabling the voltage regulator circuitry otherwise.

The foregoing summary is provided by way of illustration and is not intended to be limiting.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 illustrates a wireless power receiver integrated circuit with programmable power path mode in accordance with one novel aspect;
FIG. 2A illustrates a power switch (PSW) with NMOS pass device as one of the operational mode for a programmable wireless power receiver;
FIG. 2B illustrates a low dropout regulator (LDO) with NMOS pass device as one of the operational mode for a programmable wireless power receiver;
FIG. 2C illustrates a switched mode power supply (SMPS) with NMOS pass device as one of the operational mode for a programmable wireless power receiver;
FIG. 3 illustrates different power path modes and their suitability for different types of wireless power systems;
FIG. 4A illustrates the power paths for programming a voltage regulator to SMPS or PSW mode;
FIG. 4B illustrates the power paths for programming a voltage regulator to LDO or PSW mode;
FIG. 5 illustrates a first embodiment of a wireless receiver IC with multi-mode power paths;
FIG. 6 illustrates a second embodiment of a wireless receiver IC with multi-mode power paths;
FIG. 7 illustrates a wireless receiver IC with loopback mode in accordance with one novel aspect;
FIG. 8 is a flow chart of a method of supporting multi-mode power paths for a wireless receiver IC in accordance with one novel aspect;
FIG. 9A illustrates a configurable two-path wireless power receiver for charging a battery charger in accordance with some embodiments;
FIG. 9B illustrates a plot of voltages used to select one of the two paths of the wireless power receiver shown in FIG. 9A in accordance with some embodiments;
FIG. 10 illustrates a circuit implementation of the configurable wireless power receiver of FIG. 9A in accordance with some embodiments; and
FIG. 11 illustrates a flowchart of a process for selectively enabling a power path in a wireless power receive in accordance with some embodiments.

### DETAILED DESCRIPTION

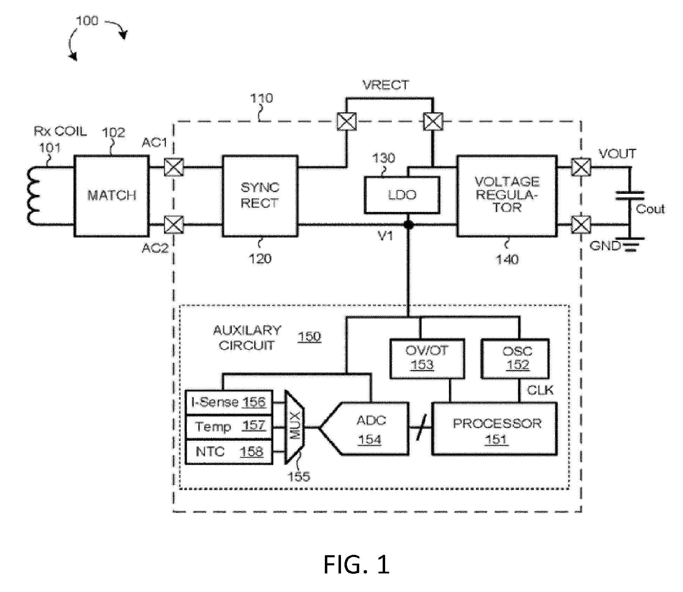

FIG. 1 illustrates a wireless power receiver 100 having an integrated circuit with a programmable power path mode in accordance with one aspect of the disclosure. Wireless power receiver 100 comprises a receiver coil 101, a match network 102, and integrated circuit (IC) 110. Integrated circuit 110 includes two input terminals AC1 and AC2, an output terminal VRECT for outputting a rectified voltage (Vrect), a ground terminal GND, and an output terminal VOUT for outputting an output voltage (Vout) to an output circuit. Integrated circuit 110 comprises a synchronous rectifier circuit 120, a low dropout regulator (LDO) 130 for supplying an internal supply voltage V1 from the rectified voltage Vrect, a voltage regulator 140, and auxiliary circuit 150. Auxiliary circuit 150 further comprises a processor 151, an oscillator (OSC) 152 for providing internal clock (CLK), an over-voltage and over-temperature protection circuit (OV/OT) 153, an analog-to-digital converter (ADC) 154, a multiplexer MUX 155, a current sensor I-Sense 156, a temperature sensor Temp 157, and a negative temperature coefficient thermistor NTC 158. The auxiliary circuit is powered by the internal supply voltage VI, which is provided by LDO 130 onto an internal node V1.

Wireless receiver 100 converts magnetic field energy to AC electrical energy using receiver coil 101 and matching network 102. Integrated circuit 110 receives the AC signal from input terminals AC1 and AC2 and converts the AC power to a rectified DC voltage onto output terminal VRECT, which provides an output voltage onto output terminal VOUT.

In accordance with one aspect of the present disclosure, integrated circuit 110 includes voltage regulator 140 having a power path can be reconfigured as either a low dropout regulator (LDO), a switched-mode power supply (SMPS), or a power switch (PSW). Circuitry for implementing all three modes may share the same pass device to reduce die area and may share the same output terminal to reduce a number of terminal pins. In an inductive wireless receiver, the power path can be reprogrammed on the fly by either software or firmware to LDO or PSW mode. In a resonant or multi-mode wireless receiver, the power path can be reprogrammed on the fly by either software or firmware to SMPS or PSW mode. A more cost effective method is to implement the LDO, SMPS and PSW to share the same pass device. Furthermore, to achieve high power transfer efficiency performance, using an N-channel MOSFET as the pass device has better efficiency and a smaller die area than using a P-channel MOSFET pass device.

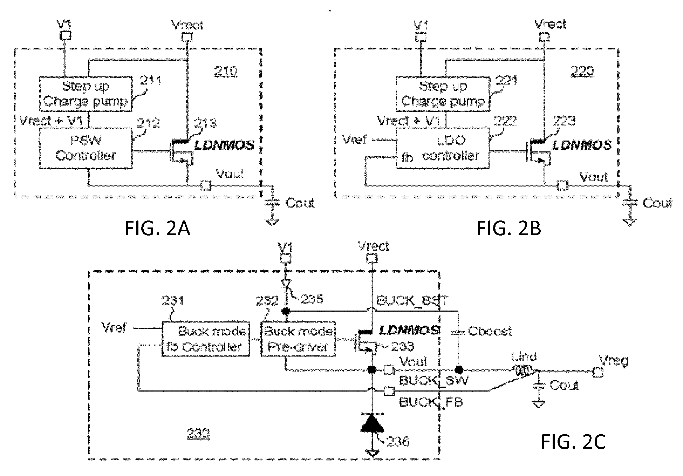

FIG. 2A illustrates a power switch (PSW) 210 with an N-channel MOSFET pass device as circuitry for implementing one of the operational modes for a programmable wireless power receiver in accordance with some embodiments. In PSW mode, the wireless power receiver directly connects the rectifier output (Vrect) to a fast charging charger. PSW 210 comprises a step up charge pump 211, a PSW controller 212, and a power switch device, which is shown as an N-channel LDNMOS transistor 213. LDNMOS transistor 213 is designed to withstand a large voltage stress across the drain-to-source junction, which allows the wireless power receiver to operate at a voltage Vrect that is higher than the gate-oxide breakdown voltage of the MOSFETs. In order to drive the gate voltage of the N-channel LDNMOS power switch device 213, a voltage roughly equal to the rectified voltage (Vrect) plus the largest voltage that can be applied safely across the device gate V1 is generated. In this implementation, the step up charge pump 211 generates a voltage (Vrect+V1) to power the PSW controller 212. The PSW controller 212 is designed to bias the N-channel LDNMOS pass device 213 at its maximum allowable VGS voltage to achieve low on-resistance.

FIG. 2B illustrates a low dropout regulator (LDO) 220 with N-channel LDNMOS pass device as circuitry for implementing one of the operational modes for a programmable wireless power receiver in accordance with some embodiments. LDO 210 comprises a step up charge pump 221, an LDO controller 222, and an N-channel LDNMOS transistor 223. The LDO controller 222 is designed to regulate a suitable VGS voltage across the N-channel LDNMOS 223 using closed loop control by feeding back the output voltage Vout to the LDO controller 222. LDO controller 222 regulates VGS by comparing the feedback voltage with a known reference voltage Vref, e.g., provided by an internal voltage from a bandgap circuit. Under an LDO dropout condition, when the output voltage Vout is very close to the rectified voltage Vrect, it is required to generate a voltage higher than the Vrect voltage to control the gate voltage of the pass device N-channel LDNMOS 223. One possible implementation is to use a charge pump circuit 221, similar to the step up charge pump 211 described for PSW 210 in FIG. 2A. In inductive wireless powering, the rectifier voltage (Vrect) is set close to the target LDO output voltage Vout. Operating the LDO near the dropout condition allows the voltage regulator to achieve good system efficiency, because the efficiency of an LDO voltage regulator is roughly equal to the output voltage Vout divided by the input voltage Vrect.

FIG. 2C illustrates a switched mode power supply (SMPS) 230 with N-channel MOSFET pass device as circuitry for implementing one of the operational modes for a programmable wireless power receiver in accordance with some embodiments. The SMPS in FIG. 2C is referred to as a buck converter, where a higher input voltage Vrect is converted to a lower regulated voltage Vreg via the buck converter and components including inductor Lind and capacitor Cout. SMPS operation mode may be applied for better efficiency when the voltage step down ratio (from Vrect to Vreg) is large. SMPS 230 comprises a buck mode controller 231, a buck mode pre-driver 232, and an N-channel LDNMOS 233. Due to the switching characteristic of SMPS 230, a bootstrapping circuit is used to power the buck mode pre-driver 232. The bootstrapping circuit comprises a diode 235 and a boost capacitor Cboost. When the output voltage Vout (BUCK_SW) is low, V1 charges Cboost through diode 235. The pre-driver 232 operates at the floating power domain between BUCK_SW and BUCK_BST. Examples of the low side pass device include, but are not limited to, a power diode for non-synchronous SMPS or an N-channel LDNMOS pass device for synchronous SMPS. The non-synchronous SMPS configuration with a power diode 236 is described herein as a non-limiting example.

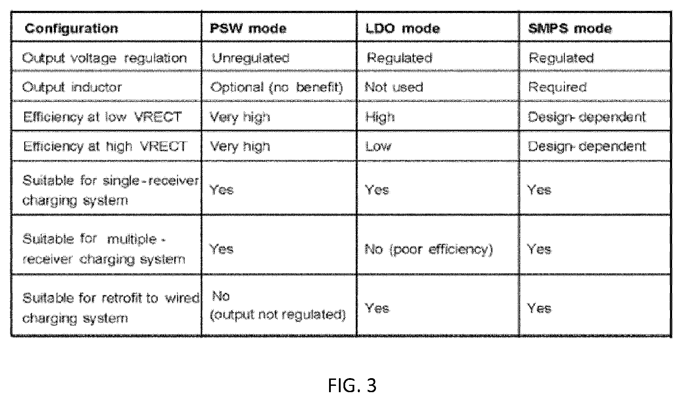

FIG. 3 illustrates different power path modes and their suitability for different types of wireless power systems. Any of the modes are suitable for a single-receiver charging system. A dual-mode LDO/PSW receiver provides the option to regulate voltage or pass an unregulated voltage, perhaps for a high-voltage, fast-charging mode. For an inductive/resonant dual mode wireless charging system, the power path can be set to SMPS/PSW mode. PSW mode provides good efficiency without use of an inductor, but the subsequent stage must be able to tolerate a wide voltage range. As such, it is not suitable for use in systems in which a well-controlled voltage is expected, such as is typically the case in a wired charging system.

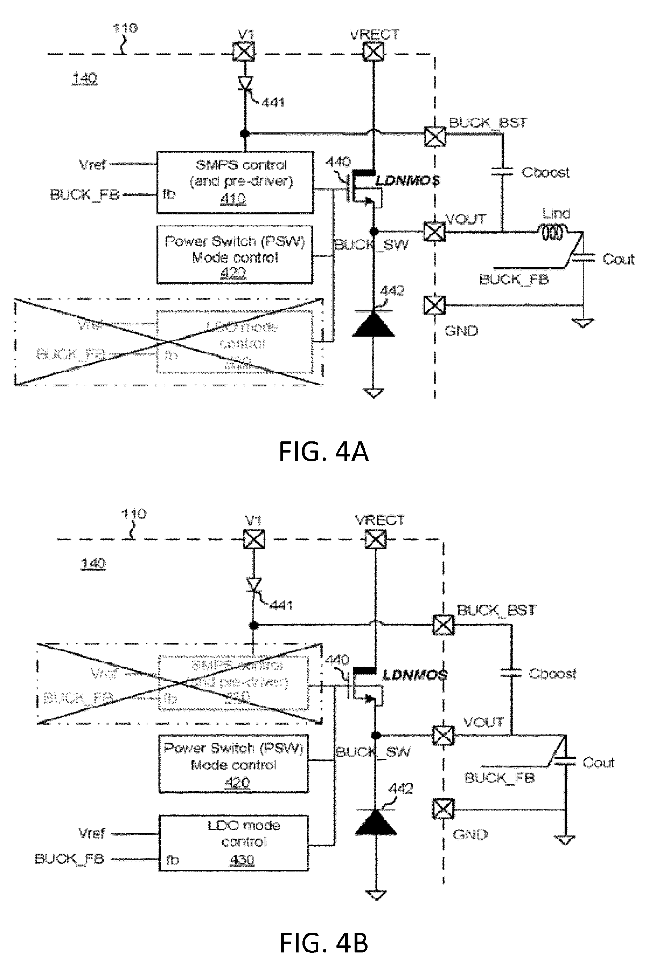

FIG. 4A illustrates an embodiment of power paths for programming a voltage regulator to SMPS or PSW mode. FIG. 4B illustrates an embodiment of power paths for programming a voltage regulator to LDO or PSW mode. In both embodiments, integrated circuit 110 of FIG. 1 comprises a programmable voltage regulator 140. Programmable voltage regulator 140 further comprises an SMPS controller 410, a PSW mode controller 420, an LDO mode controller 430, a pass device 440, a diode 441 for bootstrapping, and a low side pass device 442. Voltage regulator 140 belongs to the wireless power receiver integrated circuit 110. The components external to IC 110 include a bootstrapping capacitor Cboost, an inductor Lind, and a decoupling capacitor Cout.

The power path of the voltage regulator 140 provides LDO, SMPS and PSW modes and the circuitry for implementing these three modes share the same NMOS type pass device 440. The outputs of the three controllers are wired together and connect to the gate of the NMOS type pass device 440. When the wireless receiver system starts operating, the multi-mode receiver IC first detects whether it is operating in inductive mode or in resonant mode. For example, the synchronous rectifier 120 of the wireless receiver IC 110 can detect the AC signal frequency and determine whether the wireless receiver system is operating in inductive or resonant mode based on the detected frequency, e.g., 100-200 kHz for inductive mode, 6.78 MHz for resonant mode.

In the example of FIG. 4A, the power path of the voltage regulator 140 is programmed to SMPS or PSW mode for resonant or inductive mode wireless power receiving. Inductor (Lind) and decoupling capacitor (Cout) are used for SMPS mode operation. In PSW mode, voltage regulator 140 can function correctly either directly connected to Cout or connected to Cout through Lind. The LDO controller 430 is turned off for a resonant-mode receiver.

In the example of FIG. 4B, the power path of the voltage regulator 140 is programmed to LDO or PSW mode for inductive mode wireless power receiving. In LDO mode, the LDO output connects directly to the decoupling capacitor (Cout) and does not require the bulky and costly inductor (Lind). In PSW mode, it can function correctly either directly connected to Cout or connected to Cout through Lind. The SMPS controller 410 is turned off for inductive mode receiver.

Using the configurations of FIGS. 4A and 4B, the software/firmware on the receiver IC 110, e.g., via processor 151, can either program the power path to SMPS or PSW mode on the fly or program the power path to LDO or PSW mode on the fly for inductive mode operation. In one example, the multi-mode receiver IC determines whether to program the power path to PSW mode based on whether the charging circuit supports fast charging at a higher input voltage (e.g., ∼20V). The pass device (e.g., N-channel LDNMOS 440) dominates the wireless receiver silicon die area because it is required to deliver large power to the output. Using an N-channel MOSFET as the pass device has better efficiency and uses a smaller die area than using a P-channel MOSFET pass device. In addition, because the circuitry for all three modes share the same N-channel MOSFET pass device, the circuit die area overhead to support multi-mode is small. Furthermore, the circuitry for all three modes share the same output terminal VOUT to support a multi-mode functionality with a reduced total number of terminal pins.

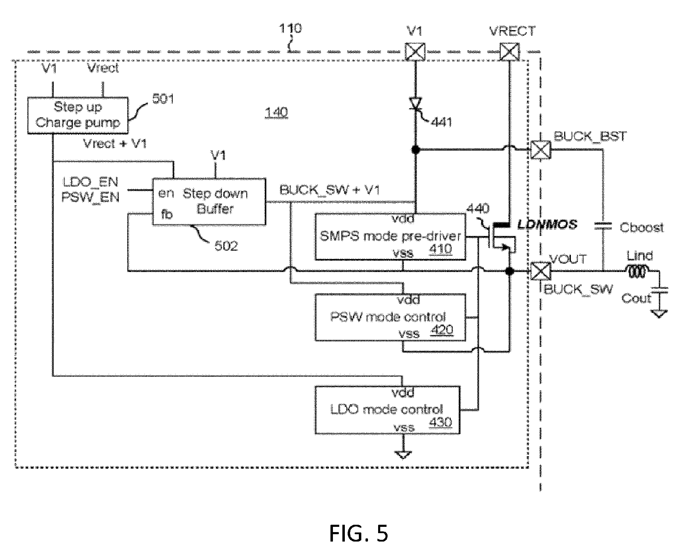

FIG. 5 illustrates a first embodiment of a wireless receiver IC 110 with multi-mode power paths. The circuit of FIG. 5 may be used when the rectified voltage Vrect is higher than the allowable gate-to-source voltage (V_{GS}) for the IC. The N-channel LDNMOS pass device can tolerate the large drain-to-source voltage (V_{DS}), while the V_{GS} tolerance is limited and provided by the internal supplies (V1). The driving logic circuit in SMPS mode pre-driver and PSW mode control include regular MOSFET devices, therefore their drain-to-source voltage has the same limitation as their gate-to-source voltage (V1).

A charge pump 501 is used to provide the step-up voltage (Vrect+V1) for the powering of LDO controller 430 and a step-down buffer 502. The step-down buffer 502 is used to generate a (VBUCK_SW+V1) voltage to supply the PSW mode controller 420 and buffer 502 is connected to BUCK_BST. When operated in LDO mode, both the SMPS mode pre-driver 410 and the PSW mode control 420 are disabled and the output is set to a high impedance. Powering the SMPS mode pre-driver 410 and PSW mode control 420 by the step-down buffer can guarantee the logic level correctness and prevent reverse leakage path from controller output to its power supply. When operated in SMPS mode, the output of step-down buffer 502 is floating and the BUCK_BST voltage is generated by a bootstrapping circuit that includes diode 441 and capacitor Cboost. Both the output of the PSW mode and the LDO mode controller are set at a high impedance condition. When operated in PSW mode, the step-down buffer 502 is enabled to power the PSW mode controller 420 and the SMPS mode pre-driver 410. The output of the SMPS mode pre-driver 410 and the LDO mode controller 430 are disabled and set to a high impedance. Using the above configuration, the three power path modes can operate with the same N-channel MOSFET pass device 440 without interfering with each other.

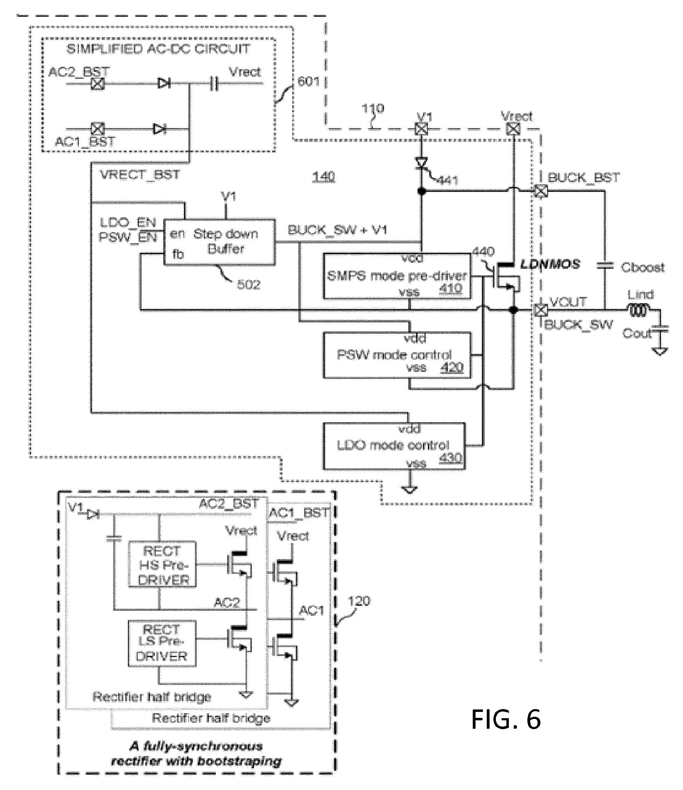

FIG. 6 illustrates a second embodiment of a wireless receiver IC 110 with multi-mode power paths. The operation of FIG. 6 is similar to that for the circuit architecture in FIG. 5. In the circuit architecture of FIG. 6, the input step-up charge pump 501 in FIG. 5 is replaced by a simplified AC-DC rectifier circuit 601. AC1_BST and AC2_BST are the bootstrapping domain power from the fully synchronous rectifier circuit 120 of FIG. 1. AC1_BST and AC2_BST track the voltages (AC1+V1) and (AC2+V1), respectively. The fully synchronous rectifier circuit 120 of IC 110 is used by the voltage regulator 140 to implement a simple step-up charge pump. The simplified AC-DC rectifier circuit 601 comprises diode 611, diode 612, and capacitor 613. The simplified AC-DC rectifier circuit 601 generates a voltage VRECT_BST which level is approximately VRECT+V1. The voltage VRECT_BST is used for powering LDO controller 430 and step-down buffer 502. The diode forward voltage is assumed small enough compared to V1 and is ignored for brevity here.

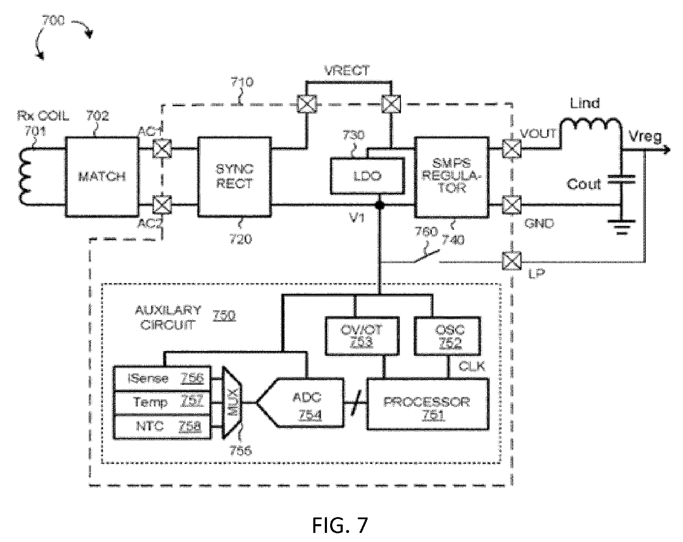

FIG. 7 illustrates a wireless power receiver 700 having an integrated circuit with a loopback mode in accordance with one aspect of the present disclosure. Wireless power receiver 700 comprises a receiver coil 701, a matching network 702, and an integrated circuit (IC) 710. Integrated circuit 710 has two input terminals AC1 and AC2, an output terminal VRECT for outputting a rectified voltage (Vrect), a ground terminal GND, an output terminal VOUT for outputting an output voltage (Vout) to an output circuit, and a loopback terminal LP for providing a regulated voltage (Vreg) to the integrated circuit 710. Integrated circuit 710 comprises a synchronous rectifier circuit 720, a low dropout regulator (LDO) 730 for providing an internal supply voltage V1 from the rectified voltage Vrect, an SMPS voltage regulator 740, and an auxiliary circuit 750. Auxiliary circuit 750 further comprises a processor 751, an oscillator (OSC) 752 for providing an internal clock (CLK), an over-voltage and over-temperature protection circuit (OV/OT) 753, an analog-to-digital converter (ADC) 754, a multiplexer MUX 755, a current sensor (ISense) 756, a temperature sensor Temp 757, and a negative temperature coefficient thermistor NTC 758. The auxiliary circuit 750 is powered by the internal supply voltage V1, which is provided by LDO 730 to an internal node V1.

Wireless power receiver 700 converts magnetic field energy to AC electrical energy using receiver coil 701 and matching network 702. Integrated circuit 710 receives the AC signal from input terminals AC1 and AC2 and converts the AC power to a rectified DC voltage onto output terminal VRECT, and finally to an output voltage onto output terminal VOUT, the output voltage can be regulated via components including an inductor Lind and a decoupling capacitor Cout.

Typically, VI is the largest voltage that can be applied safely across the device gate and is usually regulated from the rectified voltage Vrect through an internal LDO, e.g., LDO 730. In addition to powering the driver circuits of the SMPS voltage regulator 740 and the synchronous rectifier 720, V1 is also used to power the auxiliary circuit 750 of IC 710. Operating the LDO near the dropout condition allows the LDO to achieve good system efficiency, because the efficiency of the LDO is roughly equal to the output voltage divided by the input voltage. As a result, when the input voltage is much higher than the output voltage, the system efficiency of the LDO voltage regulator becomes very poor.

In accordance with one aspect of the present disclosure, after the SMPS voltage regulator 740 has been activated, a power-saving loopback mode can be used. As shown in FIG. 7, when operated in loopback mode, the SMPS output is routed back to the receiver IC 710 onto terminal LP to provide the regulated voltage Vreg onto node V1. The loopback mode is implemented by inserting a loopback switch 760 between node V1 and terminal LP. If the regulated voltage Vreg is substantially equal to the voltage VI, e.g., both voltages are equal to ∼5V, then loopback switch 760 is turned on after SMPS voltage regulator 740 is activated. This operation improves the system efficiency because the voltage V1 is efficiently provided through the SMPS voltage regulator 740 rather than being provided by LDO 730 at an efficiency of V1/Vrect. Typically, a switching mode regulator operates with better efficiency compared to an LDO when the voltage step down ratio is large. On the other hand, if the regulated voltage Vreg is much higher than the voltage VI, the loopback switch 760 is turned off and the internal supply voltage V1 is provided by LDO 730. In one embodiment, the loopback switch is implemented by a p-channel MOSFET.

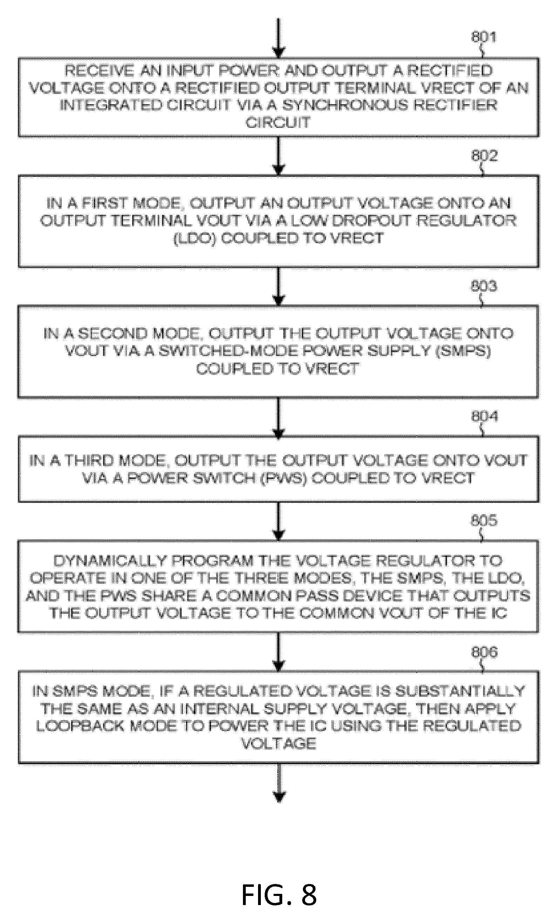

FIG. 8 is a flow chart of a method of supporting multi-mode power paths for a wireless power receiver IC in accordance with aspects of the present disclosure. In act 801, a synchronous rectifier circuit receives an input power signal and outputs a rectified voltage onto a rectified output terminal VRECT of an integrated circuit (IC). The IC comprises a programmable voltage regulator in which the power path can be reconfigured as either a low-dropout regulator (LDO), a switched-mode power supply (SMPS) or a power switch (PSW). In act 802, in a first mode, the IC outputs an output voltage onto an output terminal VOUT via the low dropout regulator (LDO) coupled to VRECT. In act 803, in a second mode, the IC outputs the output voltage onto VOUT via the switched-mode power supply (SMPS) coupled to VRECT. In act 804, in a third mode, the IC outputs the output voltage onto VOUT via the power switch (PWS) coupled to VRECT. In act 805, the IC dynamically programs the voltage regulator to operate in one of the three modes, wherein the SMPS, the LDO, and the PWS share a common pass device that outputs the output voltage to the common VOUT terminal of the IC.

When operated in SMPS mode, the output voltage is used to provide a regulated voltage through an inductor. In act 806, if the regulated voltage is substantially the same as an internal supply voltage, then a loopback mode is applied to route the regulated voltage back to the integrated circuit. The loopback mode improves system efficiency because a switching mode regulator such as SMPS has better efficiency than an LDO when the voltage step down ratio is large. The loopback mode can be implemented by a switch (e.g., a P-channel MOSFET) that can be turned on and off based on the regulated voltage.

The output power port from a wireless power receiver is typically coupled to a battery charger circuit input. Different battery charger circuits have different requirements for the range of input voltage that can be used. For example, a conventional linear charger designed for use with a USB interface may require an input voltage between 4.5V and 5.5V. However, a modern switching charger designed for use with a fast-charging system may be able to tolerate input voltages from 5V to 12V. In general, use of a higher input voltage is conducive to faster charge rates because more power can be transferred at the same current level.

The range of rectified voltages VRECT output from a wireless power receiver can be larger than the acceptable input range of a particular battery charger. As discussed above, a wireless power charger may include a voltage regulator (e.g., a buck regulator) by converting the rectified voltage to a convenient voltage for battery charging. However, including a voltage regulator increases the cost and reduces the efficiency of a wireless power receiver. In particular, the regulator includes inductive and capacitive elements that introduce losses in the circuitry thereby reducing the efficiency of the wireless power receiver. By contrast, a wireless power receiver that provides an unregulated voltage may not require LC circuit elements that reduce the efficiency of the wireless power receiver, but are limited in their ability to provide acceptable output voltages for a wide range of devices and conditions. In accordance with some embodiments, a wireless power receiver is provided that is configured to achieve the high efficiency benefits of an unregulated wireless power receiver, while also allowing for a wide rectified voltage range provided by a regulated receiver.

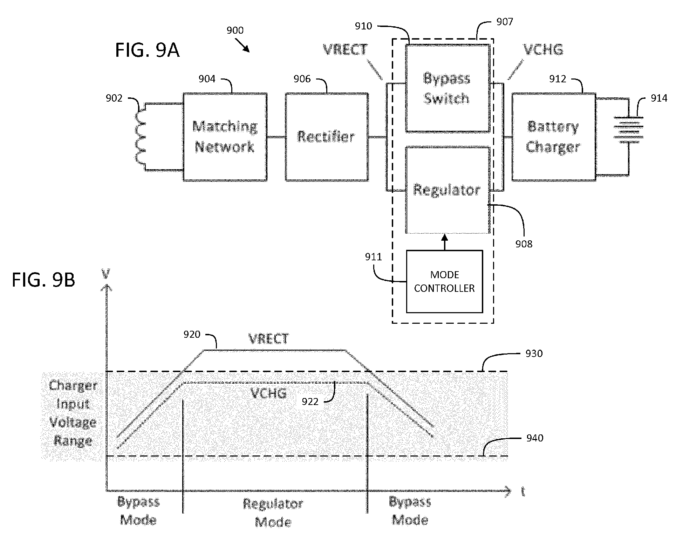

FIG. 9A illustrates a wireless power receiver 900 having a dynamically reconfigurable power path in accordance with one aspect of the present disclosure. Wireless power receiver 900 comprises a receiver coil 902, a matching network 904, rectifier circuitry 906, and power path components 907 including regulator 908 configured to output a regulated voltage and bypass switch 910 configured to output an unregulated voltage. Wireless power receiver 900 also includes a mode controller 911 configured to select one of the two power paths (e.g., by selectively activating regulator 908 or bypass switch 910) based, at least in part, on the rectified voltage VRECT output from rectifier circuitry 906 and information about an allowable input voltage for connected output circuitry, as discussed in more detail below.

The voltage output from power path components 907 is provided to output circuitry such as battery charger circuitry 912 configured to charge a battery 914 in an electronic device (not shown). The regulated power path may be implemented using a buck converter, a boost converter, a buck-boost converter, an LDO regulator, a switch capacitor DC/DC converter, or any other suitable type of voltage converter. In some embodiments, the unregulated or "bypass" power path is implemented as a switch (e.g., a MOSFET switch).

The use of two selectable power paths enables the wireless power receiver to operate in a regulated mode when the rectified voltage output from the wireless power receiver is outside of the acceptable input voltage range for a connected device (e.g., a battery charger) and to operate in an unregulated mode otherwise. By making the power path selectable, the wireless power receiver may operate more efficiently in most operating conditions, while still performing voltage regulation, as needed based on the voltage input characteristics of the device.

FIG. 9B illustrates a plot describing how the mode controller in a wireless power receiver may be configured to perform mode selection between the two power paths of the wireless power receiver in accordance with some embodiments. Trace 920 shows the rectified voltage VRECT output from rectifier 906 of wireless power receiver 900. Trace 922 shows the charging voltage of a battery charger 912 coupled to wireless power receiver 900. As an example, battery charger 912 may have a maximum charging voltage 930 (e.g., 12V). As shown, when the rectified voltage VRECT is less than the maximum charging voltage 930 (or some other threshold voltage near the maximum charging voltage), the mode controller is configured to select a bypass mode in which bypass switch 910 is enabled, thereby efficiently providing an unregulated output voltage to battery charger 912 for charging. When the rectified voltage VRECT exceeds the maximum charging voltage 930 (or some other threshold voltage near the maximum charging voltage), the mode controller is configured to select the regulated power path to provide a regulated output voltage (e.g., 11V) within the allowable charging range of the battery charger.

Operation of wireless power receiver 900 is described herein for a buck voltage regulator configuration in which the rectified voltage VRECT is regulated to provide a lower output voltage (e.g., 11V) than the maximum input voltage (e.g., 12V) of the regulator. It should be appreciated however, that use of other voltage regulator architectures is also possible. For example, battery charger 912 may also have a minimum charging voltage 940, and when the rectified voltage is below the minimum charging voltage 940 (or some other threshold voltage near the minimum charging voltage), the mode controller may be configured to select a regulated power path that includes a regulator having a boost configuration that is configured to output a voltage higher than the minimum input voltage to the regulator.

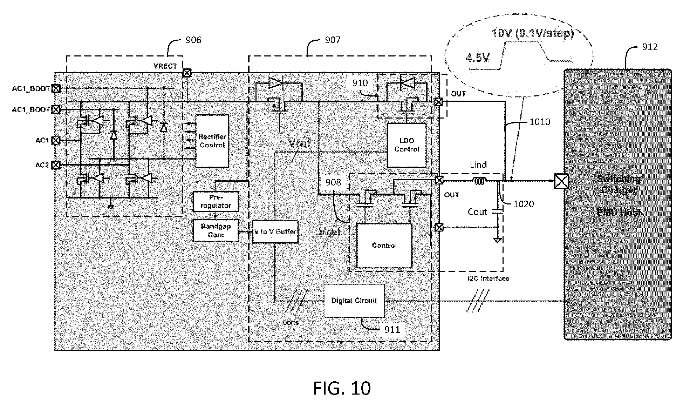

FIG. 10 illustrates a circuit implementation of a wireless power receiver that includes dynamically configurable mode selection in accordance with some embodiments. The wireless power receiver architecture includes rectifier 906 that outputs a rectified voltage VRECT, as described above. The wireless power receiver includes power path components 907 configured to provide an unregulated output voltage 1010 or a regulated output voltage 1020 to battery charger circuitry 912 by selecting one of the two power paths in the wireless power receiver. As previously described, power path components 907 include a mode controller 911 configured to select one of the two power paths for providing an output voltage to battery charger circuitry 912 based on feedback provided by the battery charging circuitry.

In the example of FIG. 10, the bypass circuitry includes a switch 910 and a low dropout (LDO) control circuitry configured to receive a control signal from the mode controller 911 to enable or disable the switch 910. When the rectified voltage VRECT is less than a maximum allowable charging voltage of the battery charger, mode controller 911 enables the bypass switch 910 to provide an unregulated voltage 1010 to the battery charging circuitry. By setting the threshold of the LDO control circuitry (e.g. Vref*N) close to or higher than the maximum allowable charging voltage of the battery charger, the bypass circuitry may operate in an unregulated mode (similar to a PSW mode) and output an unregulated voltage 1010. The threshold of the LDO control circuitry may be adjusted by changing the LDO reference voltage Vref. When the rectified voltage VRECT exceeds the maximum allowable charging voltage, mode controller 911 enables the regulator circuitry 908 to provide a regulated voltage 1020 to the battery charging circuitry. The mode controller 911 and associated circuitry may be configured to monitor the rectified voltage provided by rectifier 906 and information provided from battery charging circuitry 912 to inform the mode selection process described herein. Allowing mode selection to occur "on-the-fly" during operation of the wireless power receiver enables the receiver to dynamically select a suitable power path that effectively trades off efficiency and voltage regulation to improve the efficiency of the wireless power receiver under various loading conditions.

The efficiency gains achieved by providing unregulated voltage 1010 compared to regulated voltage 1020 during operation are evident in FIG. 10. For example, the regulated power path includes an inductor Lind and a capacitor Cout that filter the regulated voltage output from the voltage regulator circuitry. Inclusion of the inductor Lind in the power path reduces the efficiency of the regulated power path compared to the unregulated power path, which does not include the inductor. Accordingly, when possible, the unregulated power path rather than the regulated power path is used to improve the efficiency of the wireless power receiver.

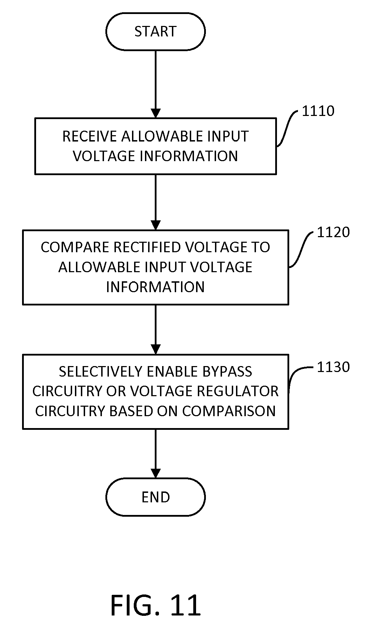

FIG. 11 illustrates a flowchart of a process for selectively enabling a power path in a wireless power receiver in accordance with some embodiments. In act 1110, information describing an allowable input voltage for output circuitry connected to the wireless power receiver is received. For example, the received information may include a minimum and/or a maximum allowable input voltage for the output circuitry such as a battery charger, as discussed above. The process then proceeds to act 1120, where a rectified voltage (e.g., a rectified voltage output from rectifier 906) is compared to the received allowable input voltage information. The process then proceeds to act 1130, where either bypass circuitry configured to output an unregulated voltage or voltage regulator circuitry configured to output a regulated voltage is selectively enabled based on the comparison of the rectified voltage to the allowable input voltage information. For example, the allowable input voltage information may specify a maximum allowable input voltage. The bypass circuitry may be enabled in act 1130 when the rectified voltage is less than the maximum allowable input voltage to provide an unregulated voltage to the output circuitry, and the voltage regulator circuitry may be enabled when the rectified voltage exceeds the maximum allowable input voltage to provide a regulated voltage to the output circuitry.

Various aspects of the apparatus and techniques described herein may be used alone, in combination, or in a variety of arrangements not specifically discussed in the embodiments described in the foregoing description and is therefore not limited in its application to the details and arrangement of components set forth in the foregoing description or illustrated in the drawings. For example, aspects described in one embodiment may be combined in any manner with aspects described in other embodiments.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

## Claims

1. A wireless power receiver, comprising:
rectifier circuitry configured to output a rectified voltage; and
power path circuitry including bypass circuitry configured to output an unregulated voltage, voltage regulator circuitry configured to output a regulated voltage, and mode controller circuitry configured to enable the bypass circuitry or the voltage regulator circuitry based, at least in part, on the rectified voltage and information describing an allowable input voltage for output circuitry electrically connected to the wireless power receiver.

2. The wireless power receiver of claim 1, wherein the bypass circuitry comprises a MOSFET switch that, when enabled, outputs the unregulated voltage.

3. The wireless power receiver of any preceding claim, wherein the voltage regulator circuitry is implemented as a buck voltage regulator.

4. The wireless power receiver of any preceding claim, wherein the information describing an allowable input voltage for output circuitry includes a maximum allowable charging voltage for a battery charging circuit, and wherein the mode controller circuitry is configured to enable the bypass circuitry when the rectified voltage is less than the maximum allowable charging voltage.

5. The wireless power receiver of any preceding claim, wherein the mode controller circuitry is configured to detect, during operation of the wireless power receiver, that the rectified voltage has exceeded a maximum allowable voltage for the electrically connected circuitry, and wherein the mode controller circuitry is configured to control the bypass circuitry and/or the voltage regulator circuitry to dynamically switch from using the bypass circuitry to using the voltage regulator circuitry when the mode controller circuitry detects that the rectified voltage has exceeded the maximum allowable voltage.

6. The wireless power receiver of any preceding claim, wherein the mode controller circuitry is configured to detect, during operation of the wireless power receiver, that the rectified voltage is less than a maximum allowable voltage for the electrically connected circuitry, and wherein the mode controller circuitry is configured to control the bypass circuitry and/or the voltage regulator circuitry to dynamically switch from using the voltage regulator circuitry to using the bypass circuitry when the mode controller circuitry detects that the rectified voltage is less than the maximum allowable voltage.

7. The wireless power receiver of any preceding claim, wherein the output circuitry includes a battery charger for a mobile electronic device, and wherein the information describing an allowable input voltage for output circuitry includes an allowable charging voltage range for the battery charger.

8. The wireless power receiver of any preceding claim, wherein the bypass circuitry includes a switch and low dropout (LDO) circuitry configured to receive a control signal from the mode controller circuitry to enable or disable the switch.

9. A mobile electronic device, comprising:
a rechargeable battery;
charging circuitry configured to charge the rechargeable battery in response to receiving a charging voltage; and
a wireless power receiver according to any one of claims 1 to 8, wherein the wireless power receiver is connected to the charging circuitry.

10. The mobile electronic device of claim 9, wherein the charging circuitry is configured to operate in a fast-charging mode and a normal-charging mode.

11. The mobile electronic device of claim 10, wherein information describing an allowable charging voltage for the charging circuitry includes information about the fast-charging mode and/or the normal-charging mode.

12. A method of selectively enabling a power path in a wireless receiver, the method comprising:
receiving information describing an allowable input voltage for output circuitry electrically connected to the wireless power receiver; and
enabling, based on the received information and a rectified voltage, bypass circuitry configured to output an unregulated voltage or voltage regulator circuitry configured to output a regulated voltage.

13. The method of claim 12, wherein the received information includes a maximum input voltage, and wherein the method further comprises enabling the bypass circuitry when the rectified voltage is less than the maximum input voltage and enabling the voltage regulator circuitry otherwise.
